# EUROPÄISCHE PATENTSCHRIFT

(11) **EP 0 548 562 B1**
(45) Veröffentlichungstag und Bekanntmachung des Hinweises auf die Patenterteilung: **24.07.1996**
(21) Anmeldenummer: 92119931.1
(22) Anmeldetag: 24.11.1992
(51) Int. Cl.: C09B 67/42, C09B 67/08, C09B 63/00, C09D 11/02

(54) **Farbstoffpräparationen von Solventfarbstoffen**
Dyestuff preparations of solvent dyes
Préparations de colorants contenant des colorants solubles dans les solvants

(30) Priorität: 05.12.1991 DE 4140085
(43) Veröffentlichungstag der Anmeldung: 30.06.1993
(73) Patentinhaber: BASF Aktiengesellschaft, 67063 Ludwigshafen (DE)
(72) Erfinder: Bast, Klaus, Dr., W-6702 Bad Duerkheim (DE); Sawa, Ronald, W-6832 Hockenheim (DE); Keil, Wolfgang, W-6701 Birkenheide (DE)

(56) Entgegenhaltungen:
- EP-A- 0 118 394
- EP-A- 0 323 407
- DE-A- 3 221 580
- DE-B- 1 117 582
- GB-A- 1 446 735
- GB-A- 2 159 972
- US-A- 3 966 669

## Beschreibung

Die vorliegende Erfindung betrifft neue pulverförmige Farbstoffpräparationen, enthaltend einen oder mehrere Solventfarbstoffe sowie ein Hilfsmittel, ausgewählt aus der Klasse, bestehend aus C₈-C₃₀-Alkylvinylethern, primären, sekundären oder tertiären Alkylaminen, die mindestens 10 Kohlenstoffatome im Molekül aufweisen, Polybutylenglykolen mit einem Molekulargewicht von 1000 bis 5000 sowie Anlagerungsprodukten von Ethylenoxid an Polybutylenglykole, wobei das Molekulargewicht der Anlagerungsprodukte 1000 bis 5000 beträgt, sowie ihre Verwendung zur Herstellung von Druckfarben oder Lacken.

Bekanntlich führt die Staubbildung, die bei festen, pulverförmigen Farbstoffpräparationen auftritt, häufig zu Problemen bei der Herstellung, Handhabung und Anwendung der Präparationen. Aus diesem Grunde ist es üblich und allgemein bekannt, den Präparationen Entstaubungsmittel, z.B. Mineralöle, zuzusetzen, um so die genannten Probleme zu vermeiden.

Durch die Entstaubung von pulverförmigen Präparationen von Solventfarbstoffen mit den üblichen an sich bekannten Entstaubungsmitteln kommt es aber zu Schwierigkeiten bei der Anwendung der Solventfarbstoffpräparationen. Beispielsweise sind die Entstaubungsmittel nicht oder nur teilweise in den Lösungsmitteln, die zur Herstellung einer Lösung der Solventfarbstoffe vorgesehen sind, löslich. Außerdem wird bei der Anwendung als Druckfarbe die Haftfestigkeit des Druckes auf einer Aluminiumfolie stark beeinträchtigt.

Ein weiteres Problem, das bei Präparationen von Solventfarbstoffen auftreten kann, ist die Einstellung einer standardisierten Farbtiefe der Präparation. Bedingt durch die jeweilige Farbstoffsynthese ist es nämlich möglich, daß man in einigen Fällen zu Produkten mit zu hoher Farbtiefe gelangt. In diesen Fällen gestaltet sich die Einstellung einer standardisierten Farbtiefe oft sehr schwer, und die Anwendung von "Verschnittmitteln" führt oft zu den obengenannten anwendungstechnischen Mängeln.

Aus der US-A-3 966 669 sind pulverförmige Präparationen von Farbstoffen beschrieben, die als Hilfsmittel thermoplastische oder hitzehärtbare Verbindungen enthalten.

Die GB-A-2 159 972 beschreibt elektrophotographische Toner, die öllösliche Farbstoffe sowie polymere Verbindungen als Bindemittel enthalten.

Schließlich wird in der DE-B-1 117 582 vorgeschlagen, das Stäuben von feinverteilten Stoffen durch Zusatz von Dodecylbenzol, Octadecen oder Trioctylamin zu verhindern.

Aufgabe der vorliegenden Erfindung war es nun, neue pulverförmige Präparationen von Solventfarbstoffen bereitzustellen, die einen Zusatzstoff enthalten, mit dessen Hilfe die oben angesprochenen Schwierigkeiten bei der Anwendung der Solventfarbstoffe vermieden werden.

Demgemäß wurden die eingangs näher bezeichneten Farbstoffpräparationen gefunden.

Die Klasse der in den erfindungsgemäßen Farbstoffpräparationen als Farbmittel enthaltenen Solventfarbstoffe ist an sich bekannt und unter dem Namen "Solvent Dyes" im Colour Index beschrieben (s. z.B. Colour Index, Second Edition 1956, Vol. 2, Seiten 2815 und 2816).

Bei den Solventfarbstoffen handelt es sich um Farbstoffe, die eine gute Löslichkeit in organischen Lösungsmitteln, z.B. Alkohole, wie Ethanol, Propanol oder Butanol, Ester, wie Ethylacetat oder Butylacetat, Ether, wie 1-Methoxypropan-2-ol, Ketone, wie Aceton oder Methylethylketon, aliphatische oder aromatische Kohlenwasserstoffe, Öle, Fette oder Wachse, aufweisen.

Von ihrer chemischen Struktur her betrachtet, handelt es sich bei den Solventfarbstoffen in erster Linie um Azofarbstoffe, aber auch Kupferphthalocyanin- oder Anthrachinonfarbstoffe kommen in Betracht.

Geeignete Azofarbstoffe sind insbesondere Mono- oder Disazofarbstoffe, wobei Monoazofarbstoffe besonders zu nennen sind, die jeweils in Form ihrer Metallkomplexe vorliegen. Als komplexierende Metalle kommen insbesondere Kupfer, Kobalt, Chrom, Nickel oder Eisen in Betracht, wobei Kupfer, Kobalt oder Chrom bevorzugt sind. Besonders hervorzuheben sind 1:1 - oder 1:2 - Chromkomplexe.

In den Komplexen befinden sich die metallisierten Gruppen vorzugsweise jeweils in ortho-Stellung zur Azogruppe, z.B. in Form von o,o'-Dihydroxy-, o-Hydroxy-o'-carboxy-, o-Carboxy-o'-amino- oder o-Hydroxy-o'-amino-azogruppierungen.

Als besonders geeignete Solventfarbstoffe sind z.B. C.I. Solvent Yellow 19, (13 900:1), C.I. Solvent Yellow 21 (18 690), C.I. Solvent Yellow 32 (48 045), C.I. Solvent Yellow 79, C.I. Solvent Yellow 81, C.I. Solvent Yellow 82 (18 690), C.I. Solvent Yellow 162, C.I. Solvent Orange 5 (18 745:1), C.I. Solvent Orange 6 (18 736:1), C.I. Solvent Orange 45 (11 700), C.I. Solvent Orange 54, C.I. Solvent Orange 56 (18 745:1), C.I. Solvent Orange 99, C.I. Solvent Brown 37, C.I. Solvent Brown 58, C.I. Solvent Red 35, C.I. Solvent Red 109, C.I. Solvent Red 118, C.I. Solvent Red 119, C.I. Solvent Red 122, C.I. Solvent Red 160, C.I. Solvent Red 225, C.I. Solvent Blue 70, C.I. Solvent Violet 2 (16 055/45 170), C.I. Solvent Black 25 (74 350), C.I. Solvent Black 27, C.I. Solvent Black 35 (12 195/12 197) oder C.I. Solvent Black 47 zu nennen.

Als Hilfsmittel sind z.B. C₈-C₃₀-Alkylvinylether, wie Octylvinylether, Isooctylvinylether, 2-Ethylhexylvinylether, Nonylvinylether, Isononylvinylether, Decylvinylether, Isodecylvinylether, Undecylvinylether, Dodecylvinylether, Tridecylvinylether, Isotridecylvinylether, Tetradecylvinylether, Pentadecylvinylether, Hexadecylvinylether, Heptadecylvinylether, Octadecylvinylether, Nonadecylvinylether, Eicosylvinylether Heneicosylvinylether, Docosylvinylether, Tricosylvinylether, Tetracosylvinylether, Pentacosylvinylether, Hexacosylvinylether, Heptacosylvinylether, Octacosylvinylether, Nonacosylvinylether oder Triacosylvinylether (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

Geeignete Hilfsmittel sind weiterhin z.B. primäre, sekundäre oder tertiäre Alkylamine, die mindestens 10 Kohlenstoffatome im Molekül aufweisen. Besonders zu nennen sind Alkylamine, die 10 bis 30, insbesondere 13 bis 25 Kohlenstoffatome im Molekül aufweisen.

Geeignete primäre Amine sind z.B. Decylamin, Isodecylamin, Undecylamin, Dodecylamin, Tridecylamin, Isotridecylamin, Tetradecylamin, Pentadecylamin, Hexadecylamin, Heptadecylamin, Octadecylamin, Nonadecylamin oder Eicosylamin.

Geeignete sekundäre Amine sind z.B. Dipentylamin, N-Ethyl-N-(2-ethylhexylamin), Bis (2-ethylhexyl)amin oder Diisotride-cylamin.

Geeignete tertiäre Amine sind z.B. Tributylamin, N,N-Dimethyl-N-(2-ethylhexyl)amin, N,N-Dimethyl-N-C₁₀/₁₈-alkylamin (Gemisch) oder N,N,N',N',N"-Pentamethyldiethylentriamin.

Geeignete Hilfsmittel sind weiterhin z.B. Polybutylenglykole, insbesondere Poly-1,4-butylenglykole, mit einem Molekulargewicht von 1000 bis 5000. Solche Produkte sind auch unter der chemischen Bezeichnung Polytetrahydrofuran gebräuchlich.

Geeignete Hilfsmittel sind weiterhin z.B. Anlagerungsprodukte von Ethylenoxid an Polybutylenglykole, insbesondere Poly-1,4-butylenglykole, wobei das Molekulargewicht der Anlagerungsprodukte 1000 bis 5000 beträgt.

Hervorzuheben sind Anlagerungsprodukte, in denen der Anteil an Ethylenoxid 15 bis 30 Gew.-%, insbesondere 20 bis 25 Gew.-%, jeweils bezogen auf das Gewicht des Anlagerungsproduktes, beträgt.

Als Hilfsmittel besonders geeignet sind Tris(2-ethyl-hexyl)amin, Polybutylenglykole mit einem Molekulargewicht von 1000 bis 5000 oder Octadecylvinylether.

Die erfindungsgemäßen pulverförmigen Farbstoffpräparationen weisen in der Regel einen Anteil an Solventfarbstoffen von 70 bis 99 Gew.-%, vorzugsweise 90 bis 99 Gew.-%, jeweils bezogen auf das Gewicht der Präparation, auf.

Der Anteil an Hilfsmittel beträgt üblicherweise 1 bis 30 Gew.-%, vorzugsweise 1 bis 10 Gew.-%, jeweils bezogen auf das Gewicht der Präparation.

Die Herstellung der neuen Farbstoffpräparationen erfolgt vorzugsweise durch Zugabe des Hilfsmittels zum pulverförmigen Solventfarbstoff, z.B. in einer Mischapparatur. Besonders geeignet ist dabei das Aufsprühen des Hilfsmittels bei einer Temperatur von 20 bis 50°C, z.B. mittels einer Schlauchpumpe über eine Düse. Durch die Wahl eines oberen Temperaturbereichs (30 bis 50°C) ist gewährleistet, daß solche Hilfsmittel, die bei 20°C in festem Aggregatzustand vorliegen, bei ihrer Anwendung in den flüssigen Aggregatzustand übergeführt worden sind.

Die erfindungsgemäßen Farbstoffpräparationen weisen die eingangs aufgeführten Nachteile nicht mehr auf, d.h. sie sind vollkommen löslich in den für Solventfarbstoffen üblichen Lösungsmitteln. Auch bei ihrer Anwendung in Druckfarben oder Lacken weisen sie keine Verminderung der Haftfestigkeit des Druckes auf einer Aluminiumfolie mehr auf.

Ein weiterer Vorteil der neuen Farbstoffpräparationen ist darin zu sehen, daß mit ihnen die Einstellung einer standardisierten Farbtiefe leicht möglich ist. Durch Zugabe des Hilfsmittels in der geeigneten Menge kann die standardisierte Farbtiefe erreicht werden, ohne daß die oben aufgeführten anwendungstechnischen Mängel auftreten.

Die erfindungsgemäßen Farbstoffpräparationen eignen sich in vorteilhafter Weise zur Herstellung von Druckfarben, z.B. Flexo- oder Tiefdruckfarben, oder Lacken, z.B. lufttrocknende, säurehärtende oder aminhärtende Einbrennlacke oder Polyurethanlacke oder peroxidhärtende Polyesterlacke, oder auch von Holzbeizen, Kugelschreiberpasten, Tinten oder elektrostatischen Tonern.

Die folgenden Beispiele sollen die Erfindung näher erläutern.

### Beispiel 1

In einem Mischer wurden 1 kg C.I. Solvent Yellow 79 vorgelegt. Bei einer Temperatur von 20°C wurden unter Rühren mit einer Schlauchpumpe über eine Düse 30 g Polybutylenglykol mit einem Molekulargewicht von 1250 zugegeben. Nach erfolgter Zugabe, die 10 Minuten in Anspruch nahm, wurde noch 30 Minuten bei 20°C nachgerührt. Die resultierende Farbstoffpräparation war sofort gebrauchsfertig.

### Beispiel 2

In einem Mischer wurde 1 kg C.I. Solvent Yellow 82 (18 690) vorgelegt. Bei einer Temperatur von 20°C wurden unter Rühren mit einer Schlauchpumpe über eine Düse 100 g Polybutylenglykol mit einem Molekulargewicht von 1200 zugegeben. Nach erfolgter Zugabe, die 30 Minuten in Anspruch nahm, wurde noch 30 Minuten bei 20°C nachgerührt. Die resultierende Farbstoffpräparation war sofort gebrauchsfertig.

### Beispiel 3

In einem Mischer wurden 100 g C.I. Solvent Orange 56 (18 745:1) vorgelegt. Bei einer Temperatur von 50°C wurden unter Rühren mit einer Schlauchpumpe über eine Düse 20 g Octadecylvinylether zugegeben. Nach erfolgter Zugabe, die 10 Minuten in Anspruch nahm, wurde noch 30 Minuten bei 50°C nachgerührt. Die resultierende Farbstoffpräparation war sofort gebrauchsfertig.

### Beispiel 4

In einem Mischer wurde 1 kg C.I. Solvent Blue 70 vorgelegt. Bei einer Temperatur von 50°C wurden unter Rühren mit einer Schlauchpumpe über eine Düse 100 g Octadecylvinylether zugegeben. Nach erfolgter Zugabe, die 30 Minuten in Anspruch nahm, wurde noch 30 Minuten bei 50°C nachgerührt. Die resultierende Farbstoffpräparation war sofort gebrauchsfertig.

### Beispiel 5

In einem Mischer wurden 100 g C.I. Solvent Black 35 (12 195/12 197) vorgelegt. Bei einer Temperatur von 20°C wurden unter Rühren mit einer Schlauchpumpe über eine Düse 10 g Tris(2-ethylhexyl)amin zugegeben. Nach erfolgter Zugabe, die 20 Minuten in Anspruch nahm, wurde noch 30 Minuten bei 20°C nachgerührt. Die resultierende Farbstoffpräparation war sofort gebrauchsfertig.

### Beispiel 6 (Anwendung)

0,5 g der Farbstoffpräparation aus Beispiel 2 wurden zusammen mit 19,5 g eines handelsüblichen Lacks auf Basis von niedrig substituierter Nitrocellulose (16 gew.-%ig in Ethylacetat/Ethanol) auf einem Rollwerk gerollt. Die Farbstoffpräparation löste sich sehr gut im Lack. Die resultierende Druckfarbe wurde mit einer 24 µm Rakel auf Aluminiumfolie aufgebracht und getrocknet.

Nach der Trocknung ist der Druck siegelecht und haftet fest auf der Aluminiumfolie.

### Beispiel 7 (Anwendung)

0,5 g der Farbstoffpräparation aus Beispiel 4 wurden zusammen mit 19,5 g eines handelsüblichen Lacks auf Basis eines Vinylchlorid/Vinylacetat-Copolymeren (11,5 gew.-%ig in Ethylacetat/Methylethylketon) auf einem Rollwerk gerollt. Die Farbstoffpräparation löste sich sehr gut im Lack. Die resultierende Druckfarbe wurde mit einer 24 µm Rakel auf Aluminiumfolie aufgebracht und getrocknet.

Nach der Trocknung haftet der Druck fest auf der Aluminiumfolie.

## Patentansprüche

1. Pulverförmige Farbstoffpräparationen, enthaltend einen oder mehrere Solventfarbstoffe sowie ein Hilfsmittel, ausgewählt aus der Klasse, bestehend aus C₈-C₃₀-Alkylvinylethern, primären, sekundären oder tertiären Alkylaminen, die mindestens 10 Kohlenstoffatome im Molekül aufweisen, Polybutylenglykolen mit einem Molekulargewicht von 1000 bis 5000 sowie Anlagerungsprodukten von Ethylenoxid an Polybutylenglykole, wobei das Molekulargewicht der Anlagerungsprodukte 1000 bis 5000 beträgt.

2. Pulverförmige Farbstoffpräparationen nach Anspruch 1, enthaltend 70 bis 99 Gew.-%, bezogen auf das Gewicht der Präparation, eines oder mehrerer Solventfarbstoffe sowie 1 bis 30 Gew.-%, bezogen auf das Gewicht der Präparation, eines Hilfsmittels.

3. Pulverförmige Farbstoffpräparationen nach Anspruch 1, enthaltend als Solventfarbstoff einen oder mehrere Farbstoffe aus der Klasse der Metallkomplexe von Mono- oder Disazofarbstoffen.

4. Verwendung der pulverförmigen Farbstoffpräparationen gemäß Anspruch 1 zur Herstellung von Druckfarben oder Lacken.

## Claims

1. Pulverulent dye preparations comprising one or more solvent dyes and an auxiliary selected from the group consisting of C₈-C₃₀-alkyl vinyl ethers, primary, secondary or tertiary alkylamines having at least 10 carbon atoms in the molecule, polybutylene glycols having a molecular weight of from 1000 to 5000 and addition products of ethylene oxide with polybutylene glycols, said addition products having a molecular weight of from 1000 to 5000.

2. Pulverulent dye preparations as claimed in claim 1, including from 70 to 99% by weight, based on the weight of the preparation, of one or more solvent dyes and from 1 to 30% by weight, based on the weight of the preparation, of an auxiliary.

3. Pulverulent dye preparations as claimed in claim 1, including as solvent dye one or more dyes of the class of the metal complexes of mono- or disazo dyes.

4. The use of the pulverulent dye preparations as claimed in claim 1 for preparing printing inks or coatings.

## Revendications

1. Préparations en poudre de colorants, contenant un ou plusieurs colorants solubles dans les solvants ainsi qu'un adjuvant choisi dans la classe constituée par les oxydes de vinyle et d'alkyle en C₈-C₃₀, les alkylamines primaires, secondaires ou tertiaires qui renferment au moins 10 atomes de carbone dans la molécule, les polybutyléneglycols ayant un poids moléculaire de 1000 à 5000 et les produits d'addition d'oxyde d'éthylène à des polybutyléneglycols, le poids moléculaire des produits d'addition étant compris entre 1000 et 5000.

2. Préparations en poudre de colorants selon la revendication 1, contenant 70 à 99% en poids, par rapport au poids de la préparation, d'un ou de plusieurs colorants solubles dans les solvants, ainsi que 1 à 30% en poids, par rapport au poids de la préparation, d'un adjuvant.

3. préparations en poudre de colorants selon la revendication 1, contenant, comme colorant soluble dans les solvants, un ou plusieurs colorants de la classe des complexes métalliques de colorants mono- ou disazoïques.

4. Utilisation des préparations en poudre de colorants selon la revendication 1 pour la fabrication d'encres d'imprimerie ou de laques.
